(19) Europäisches Patentamt
European Patent Office
Office européen des brevets

(11) **EP 2 369 362 A1**

(12) **EUROPEAN PATENT APPLICATION**

(43) Date of publication:
**28.09.2011 Bulletin 2011/39**

(51) Int Cl.:
*G01S 7/527* (2006.01)       *G01S 7/533* (2006.01)
*G01S 15/88* (2006.01)       *G01F 23/284* (2006.01)
*G01F 23/296* (2006.01)       *G01S 7/292* (2006.01)
*G01S 13/88* (2006.01)

(21) Application number: **10156835.0**

(22) Date of filing: **18.03.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(71) Applicant: **Siemens Milltronics Process Instruments Inc.
Peterborough, ON K9J 7B1 (CA)**

(72) Inventors:
 • **Davidson, Timothy, Dr.
   Ancaster L9G 3X2 (CA)**
 • **Liu, Jing
   Peterborough K9L 0A6 (CA)**
 • **Reilly, James, Dr.
   Hamilton L8P 4G3 (CA)**

(74) Representative: **Maier, Daniel Oliver
Siemens AG
Postfach 22 16 34
80506 München (DE)**

(54) **A receiver for a pulse-echo ranging system with digital polyphase decimation filter**

(57)     A receiver for a pulse-echo ranging system comprises an analog-to-digital converter (ADC) for digitizing a received raw echo, a finite impulse response (FIR) filter (1) for band-pass filtering the digitized echo ($x[n]$) and an envelope detector for detecting the envelope of the band-pass filtered echo.

In order to obtain a very high processing speed and allow the receiver easily adjustable to measurement conditions with different noise levels or systems working with different carrier frequencies, the FIR filter (1) comprises an efficient polyphase decimation filter having M branches with an 1/M down-sampler (2) and a subfilter (4) in each branch, where M is the quotient of the sampling rate of the ADC and at least approximately twice the occupied bandwidth of the pulse.

FIG 1

**Description**

The present invention relates to a receiver for a pulse-echo ranging system, said receiver comprising:

an analog-to-digital converter (ADC) for digitizing a received raw echo,
a finite impulse response (FIR) filter for band-pass filtering the digitized echo and
an envelope detector for detecting the envelope of the band-pass filtered echo.

Such a receiver is known from US 7,334,470.

Pulse-echo ranging systems, also known as time-of-flight ranging systems, are commonly used in level or distance measurement applications and determine the distance to a target (e.g. the reflective surface of a material the filling level of which is to be measured) by measuring how long after transmission of an energy pulse or a burst of such pulses the echoes or reflected pulses are received. Such systems typically use ultrasonic pulses or pulsed radar or microwave signals.

The accuracy of the measurement is directly based on detecting the arrival of the echo of interest, which requires identifying it in the received echo profile. This detection is realized based on the shape of the sent pulse. The echo, however, may be distorted in shape or even completely buried into a noise floor, which highly impacts the accuracy of the measurement. In a tank, for example, the target of interest is the surface of the material contained therein. The measurement environment is often cluttered with obstacles or it is noisy when the tank is filled. The obstacles may produce multiple echoes and the noise or physical presence of tank walls may distort the echo from the material in the tank.

To reduce the noise level, the received noisy echo profile is typically passed through a band-pass filter, which is specifically designed around the carrier frequency of the pulse so that noise lying outside the pass band of the filter is removed. An accurate measurement requires that the pass band is narrow so that it removes most of the noise, and the band is just around the carrier frequency of the pulse for not distorting the desired pulse. Sharp analog filters are complicated, they cannot be tuned easily and their characteristic may drift over time or due to temperature changes. In contrast, finite impulse response (FIR) filters have linear phase characteristics, transfer functions, and stability that analog filters cannot achieve.

The above-mentioned US 7,334,470 discloses a digital receiver for a pulse-echo ranging system including an analog-to-digital converter (ADC) for digitizing the received raw echo, a buffer/memory stage for partial or full buffering of the digital samples, a low pass digital averaging filter to minimize the effects of aliasing, an FIR band-pass filter and an envelope detector recovering the envelope of the band-pass filtered echo from the positive peaks from the carrier.

Decimation filters are known in the art and are widely used in the field of communications and multi-media systems to convert a relatively high speed serial data stream, such as from a delta sigma modulator, to a slower bit rate, wide word data. The output sampling rate is 1/M times the input sampling rate, with M being the decimation factor. Efficient polyphase decimation filters have M branches with an 1/M down-sampler and a subfilter in each branch and provide speed optimization because each subfilter runs at the output sampling rate.

It is an object of the present invention to provide a receiver for a pulse-echo ranging system which has a very high processing speed and is easily adjustable to measurement conditions with different noise levels or systems working with different carrier frequencies.

According to the invention this object is achieved for the receiver stated at outset in that the FIR filter comprises an efficient polyphase decimation filter having M branches with an 1/M down-sampler and a subfilter in each branch, where M is the quotient of the sampling rate of the ADC and at least approximately twice the occupied bandwidth of the pulse.

The polyphase structure of the FIR filter breaks down the filtering process of the echo profile into a maximum of M branches, thus minimizing the required processing time. Classic thinking suggests that M can not be larger than the ratio of the input sampling rate and the Nyquist rate which is twice the pulse's carrier frequency. In the receiver according to the invention, the output sampling rate is based on the occupied bandwidth of the pulse, as opposed to its carrier frequency. The occupied bandwidth is specified by the International Telecommunication Union (ITU) such that, below the lower and above the upper frequency limits, the mean powers are each equal to 0.5 percent of the total mean power. The occupied bandwidth is therefore also called the 99 percent or 20dB power bandwidth. The occupied bandwidth of the pulse is substantially lower than the carrier frequency, which allows to choose the factor M greater than permitted by the Nyquist criterion and thus leads to even shorter processing times in the subfilters.

Although the factor M is based on the bandwidth of the pulse, it does not satisfy the classic Nyquist criterion, and therefore it is possible that the down-sampled echo pulse overlaps itself with its own sampled copies (image). This can be avoided in that each branch of the filter comprises a single-side-band filter between the down-sampler and the subfilter. The overlapping of down-sampled pulse happens between the pulse and its negative frequency components. However, due to the symmetry of the pulse in its positive and negative frequency range, removing the negative frequency components will not discard any information and, at the same time, avoid overlapping. The single-side-band filter is a low-pass filter that simply zeroes negative frequency components. The single-side-band filters are easy to implement and save processing time by processing less number of data points.

The FIR decimation filter is easily adjustable to measurement conditions with different noise levels or ranging systems working with different carrier frequencies. If, for example, the transducer of the pulse-echo ranging system is replaced at another carrier frequency, the filter can be shifted to the desired frequency with no other elements or bandwidth to be changed. In tank level measurement applications when pumps are turned on for filling the tank, typically more noise will appear which requires a narrower bandwidth of the band-pass filter. When target is close, the signal-to-noise ratio (SNR) will be high and the filter can be chosen to have wider bandwidth to increase the processing rate. To this end, the receiver preferably further comprises a filter generation and adaption stage for calculating the FIR filter coefficients in dependence on given values of the pulse carrier frequency and bandwidth and for adjusting the FIR filter coefficients in dependence on status signals, such as, e.g. taking the above example, a pump-on signal.

Finally, the FIR filter has a linear phase response so that all frequency components in the pulse will experience the same delay and hence the pulse shape will be preserved.

The envelope of the band-pass filtered echo contains the information needed to detect the arrival of the echo. Usually on over-sampled data, the envelope can be approximately recovered by choosing peak points from the echo. This method is simple but inaccurate. In the receiver according to the invention, the band-passed echo is down-sampled below the Nyquist rate. As the echo is narrow band, it can be mathematically described as: $A(t) \cdot \cos(2\pi ft + \Phi)$, where f is the carrier frequency and $A(t)$ denotes the envelope which changes with time t. The echo can be equivalently written into a complex form: $A(t) \cdot \exp\{-j(2\pi ft + \Phi)\}$. Thus, the echo can be obtained by taking the real part of it, and the envelope is nothing but the complex amplitude. In implementation, the envelope can be calculated by reconstructing the complex echo from the real input data and taking the amplitude (absolute value) of the complex echo. If the above-mentioned single-side-band filters are arranged in the branches of the polyphase decimation filter, the envelope can be simply obtained by taking the absolute value from the output of the FIR decimation filter because the outputs of the single-side-band filters are already of complex value.

The invention will be now described by way of example and with reference to the accompanying drawing, in which:

Figure 1 shows a block diagram of an efficient polyphase FIR decimation filter;

Figure 2 shows an example of a full rate FIR filtered ultrasonic echo;

Figure 3 shows an example of the echo filtered with a polyphase FIR decimation filter taking into account the Nyquist criterion; Figure 4 shows an example of the echo filtered with a polyphase FIR decimation filter according to the invention; and

Figure 5 shows in block diagram a software implementation of an embodiment of the digital receiver according to the invention.

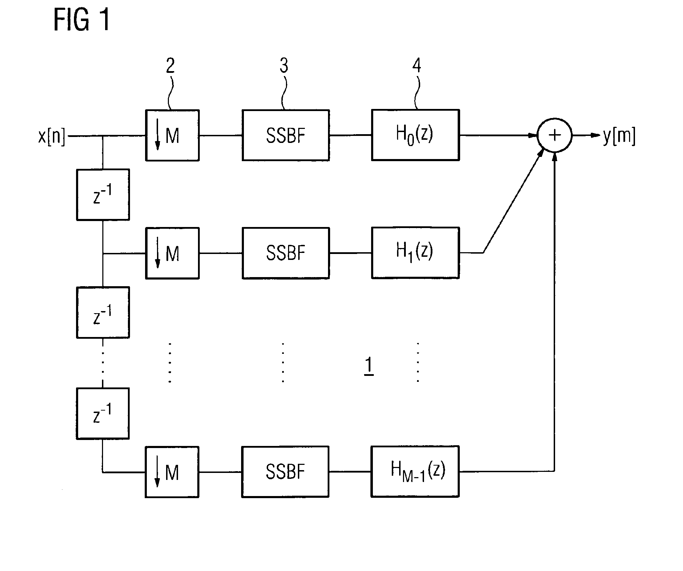

Figure 1 shows an efficient polyphase FIR decimation band-pass filter 1 having M branches with an 1/M down-sampler 2, a single-side-band filter 3 and a subfilter 4 in each branch. The input data x[n] is comprised of an oversampled digitized raw echo received in a pulse-echo ranging system. The output data y[m] is down-sampled at a rate which is 1/M times the input sampling rate, with M being the decimation factor. Due to the polyphase structure, the subfilters 4 each have 1/M length compared to the overall filter length of the FIR decimation band-pass filter 1. Therefore, the total computation time is reduced by M times compared to a non-polyphase filter.

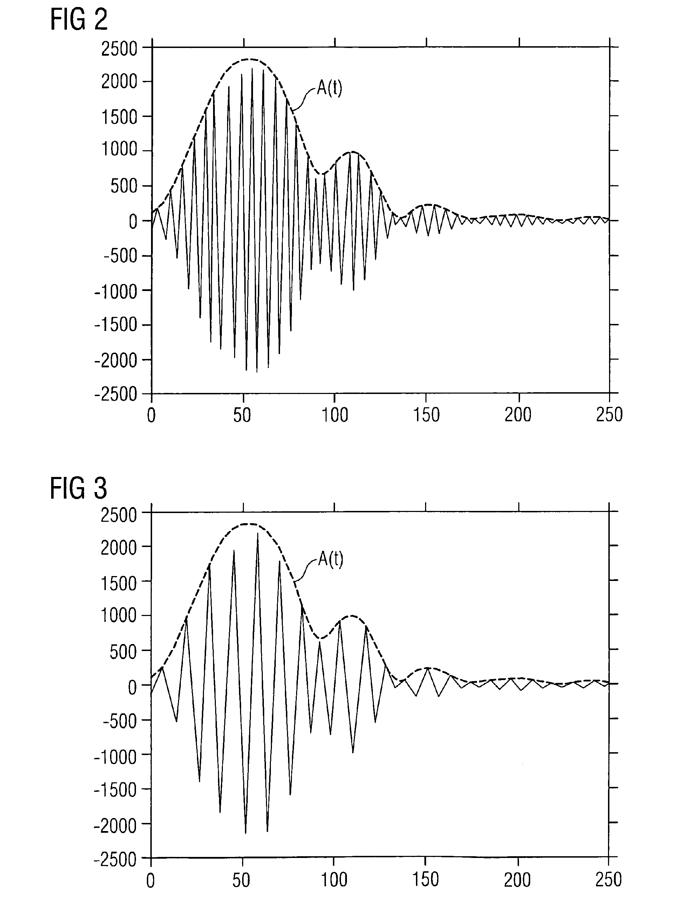

Figure 2 shows a typical ultrasonic echo that is band-pass filtered at full rate. The envelope $A(t)$ of the band-pass filtered echo contains the information for detection of the arrival of the echo.

Figure 3 shows the same data having passed through a corresponding polyphase FIR decimation band-pass filter having M = 4 branches that costs only 1/4 of the processing time. It can be observed that the envelope $A(t)$ has the same shape as the one in Figure 2.

Classic thinking suggests that M can not be larger than the ratio of the input sampling rate and the Nyquist rate which is twice carrier frequency of the sent pulse or the received echo. In an ultrasonic pulse-echo ranging system where the carrier frequency of the sent pulses is 55kHz and the received raw echo is digitized with a sampling rate of 325kHz, the maximum M equals to $325kHz/(2 \cdot 55kHz) \approx 3$. The ultrasonic pulse, however, and thus the echo is a narrow band signal which has a 99 percent bandwidth (occupied bandwidth) no larger than 20kHz. Therefore, the maximum M can be chosen as $325kHz/(2 \cdot 20kHz) \approx 8$. Thus, M is chosen to be the quotient of the input sampling rate of the polyphase FIR decimation band-pass filter 1 and at least approximately twice the occupied bandwidth of the pulse.

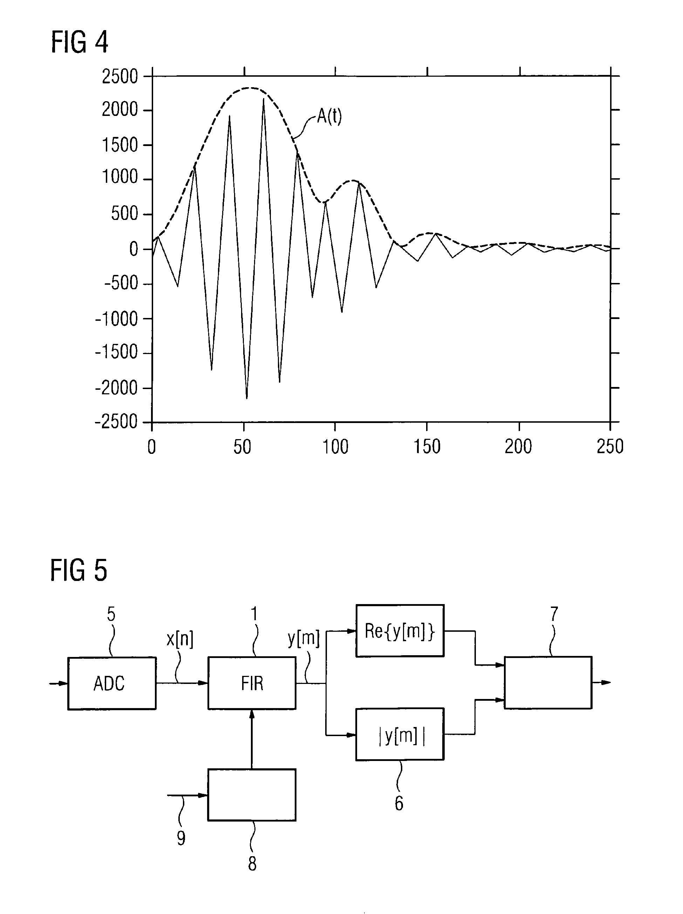

Figure 4 shows the echo having passed through a polyphase FIR decimation band-pass filter having M = 8 branches. It can be seen that the envelope $A(t)$ is well preserved at a cost of only 1/8 of the processing time compared to the original. As the Nyquist criterion is not satisfied, it is possible that the down-sampled echo overlaps itself with its own sampled copies (image). This may be avoided by provision of the single-side-band filters 3 in each branch of the FIR decimation band-pass filter 1 (Figure 1).

Figure 5 shows a block diagram of the digital receiver according to the invention. The receiver comprises an analog-to-digital converter (ADC) 5 of oversampling type for digitizing the received raw echo. The digitized raw echo x[n] is band-pass filtered in the efficient polyphase FIR decimation filter 1. The outputs of the single-side-band filters 3 in the branches of the polyphase decimation filter 1 are of complex value and so is the output data y[m] of the polyphase decimation filter 1. Thus, the band-pass filtered echo can be written as $A(t) \cdot \exp\{-j(2\pi ft + \Phi)\}$ and its envelope $A(t)$ is detected in an envelope detector 6 by taking the absolute value $|y[m]|$ from the output $y[m]$ of the FIR decimation filter 1. The echo, which is the real part $Re\{y[m]\}$ of the FIR decimation filter output, and the envelope are passed to a subsequent stage 7 for further processing.

The receiver further comprises a filter generation and adaption stage 8 for calculating the coefficients of the FIR filter 1 in dependence on given values of the pulse carrier frequency and bandwidth and for adjusting the coefficients of the FIR filter 1 in dependence on status signals 9 from the process environment where the level measurement takes place. Such status signals 9, e.g. the switch-on signal for an agitator in a tank, may indicate measurement situations where higher noise levels may occur and a narrower bandwidth of the band-pass filter 1 is required.

The receiver may be thus implemented as follows:

Obtain desired FIR filter characteristics

```
[carrierFrequency, bandwidth, attenuation] =
       obtainFilterCharacteristics(system);
```

Calculate FIR filter coefficients

```
[FIRCoefficients] = obtainFilter(carrierFrequency, cutoff, attenuation);
```

Obtain Single Side-band Selection filter

```
[SSLP] = obtainSSLP(filterLength);
```

Calculate equivalent filter coefficients:

```
[filterCoefficients] = convolution(FIRCoefficients, SSLP);
```

Calculate the polyphase structure, i.e., the subfilter on each branch for m = 1:M

```
H[m] = filterCoefficients(m-1:M:end);
```

end
Perform polyphase filter

```
[outData] = poly(inData, H)
```

Obtain pulse and envelope

```
[data] = real(outData);

[envelope] = absolute(outData).
```

**Claims**

1. A receiver for a pulse-echo ranging system, said receiver comprising:

   an analog-to-digital converter (ADC) (5) for digitizing a received raw echo,
   a finite impulse response (FIR) filter (1) for band-pass filtering the digitized echo (x[n]) and
   an envelope detector (6) for detecting the envelope of the band-pass filtered echo,
   **characterized in that**
   the FIR filter (1) comprises an efficient polyphase decimation filter having M branches with an 1/M down-sampler (2) and a subfilter (4) in each branch, where M is the quotient of the sampling rate of the ADC (5) and at least approximately twice the occupied bandwidth of the pulse.

2. The receiver of claim 1, **characterized in that** each branch comprises a single-side-band filter (3) between the down-sampler (2) and the subfilter (4).

3. The receiver of claim 1 or 2, further comprising a filter generation and adaption stage (8) for calculating the FIR filter coefficients in dependence on given values of the pulse carrier frequency and bandwidth and for adjusting the FIR filter coefficients in dependence on status signals (9).

4. The receiver of any of the preceding claims, **characterized in that** the envelope detector (6) is arranged to obtain the envelope (A(t)) of the echo from the absolute value of the complex band-pass filtered echo.

FIG 1

FIG 2

FIG 3

FIG 4

FIG 5

Europäisches
Patentamt

European
Patent Office

Office européen
des brevets

## EUROPEAN SEARCH REPORT

Application Number

EP 10 15 6835

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 864 827 B1 (TISE BERTICE L [US] ET AL) 8 March 2005 (2005-03-08) * column 5, line 1 - column 7, line 59; figures 7-9, 11, 12A, 12B * | 1-4 | INV. G01S7/527 G01S7/533 G01S15/88 G01F23/284 G01F23/296 ADD. G01S7/292 G01S13/88 |
| X | US 2002/040189 A1 (AVERKIOU MICHALAKIS [US] ET AL) 4 April 2002 (2002-04-04) * paragraph [0036] - paragraph [0042]; figures 4, 8 * | 1-4 | |
| A | US 6 549 151 B1 (KOBER WOLFGANG [US] ET AL) 15 April 2003 (2003-04-15) * the whole document * | 1-4 | |
| A | US 2005/253747 A1 (TAKI KAZUNARI [JP] ET AL) 17 November 2005 (2005-11-17) * paragraph [0093] - paragraph [0095]; figure 3 * | 1-4 | |
| A | WO 2004/082461 A2 (VUESONIX SENSORS INC [US]; ABEND KENNETH [US]; MILLER CHRISTOPHER X [U) 30 September 2004 (2004-09-30) * page 4, paragraph 2; figure 2 * | 1-4 | TECHNICAL FIELDS SEARCHED (IPC) G01S G01F |

The present search report has been drawn up for all claims

| Place of search | Date of completion of the search | Examiner |
|---|---|---|
| Munich | 27 August 2010 | Schmelz, Christian |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

EP 2 369 362 A1

## ANNEX TO THE EUROPEAN SEARCH REPORT
## ON EUROPEAN PATENT APPLICATION NO.

EP 10 15 6835

This annex lists the patent family members relating to the patent documents cited in the above-mentioned European search report.
The members are as contained in the European Patent Office EDP file on
The European Patent Office is in no way liable for these particulars which are merely given for the purpose of information.

27-08-2010

| Patent document cited in search report | | Publication date | Patent family member(s) | | Publication date |
|---|---|---|---|---|---|
| US 6864827 | B1 | 08-03-2005 | NONE | | |
| US 2002040189 | A1 | 04-04-2002 | US 2002055681 A1 | | 09-05-2002 |
| US 6549151 | B1 | 15-04-2003 | NONE | | |
| US 2005253747 | A1 | 17-11-2005 | WO 2004056001 A1 | | 01-07-2004 |
| WO 2004082461 | A2 | 30-09-2004 | EP 1610688 A2 | | 04-01-2006 |
| | | | JP 2006520642 T | | 14-09-2006 |

EPO FORM P0459

For more details about this annex : see Official Journal of the European Patent Office, No. 12/82

10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7334470 B